# EUROPEAN PATENT APPLICATION

(11) **EP 1 900 403 A1**
(43) Date of publication of application: **19.03.2008**
(21) Application number: 06767611.4
(22) Date of filing: 29.06.2006
(51) Int. Cl.: A63F 13/00, A63F 13/04, A63F 13/12, G06T 15/00, G06T 17/40

(54) **NETWORK GAME SYSTEM, GAME MACHINE, GAME MACHINE CONTROL METHOD, AND INFORMATION STORAGE MEDIUM**

(30) Priority: 29.06.2005 JP 2005190329
(71) Applicant: Konami Digital Entertainment Co., Ltd., Tokyo 107-8324 (JP)
(72) Inventor: MATSUYAMA, S. Konami Digital Entertain. Co., Ltd., Minato-ku, Tokyo 1078324 (JP); ASHIDA, H., Konami Digital Entertain. Co., Ltd., Minato-ku, Tokyo 1078324 (JP); ONODERA, N., Konami Digital Entertain. Co., Ltd., Minato-ku, Tokyo 1078324 (JP); OSATO, S., Konami Digital Entertain. Co., Ltd., Minato-ku, Tokyo 1078324 (JP); WAKUDA, H., Konami Digital Entertain. Co., Ltd., Minato-ku, Tokyo 1078324 (JP); SHIMADA, T., Konami Digital Entertain. Co., Ltd., Minato-ku, Tokyo 1078324 (JP); FUKUSHIMA, K., Konami Digital Entertain. Co., Ltd., Minato-ku, Tokyo 1078324 (JP); ESAKA, H., Konami Digital Entertain. Co., Ltd., Minato-ku, Tokyo 1078324 (JP); OKINO, T., Konami Digital Entertain. Co., Ltd., Minato-ku, Tokyo 1078324 (JP)
(74) Representative: Müller-Boré & Partner Patentanwälte
(86) International application number: PCT/JP2006/312994
(87) International publication number: WO 2007/001051

(57) **Abstract**

To provide a network game system for enabling the player of a game to immediately find out, when a moving object, such as a bullet object or the like, contacts another object in a virtual space, from where the moving object came, by looking at the game screen image. Each of the game machines comprises a contact determination unit for determining whether or not the moving object contacts another object (402) placed in the virtual space; a contact direction acquisition unit for acquiring a contact direction of the moving obj ect relative to the other object (402) when the contact determination unit determines that the moving object contacts the other object (402); and a contact image displaying unit for displaying an image (84) in accordance with a direction of a contact surface of the other object (402) and the contact direction at a position in the other object (402) in accordance with a contact position of the moving object.

## Description

### TECHNICAL FIELD

The present invention relates to a network game system, a game machine, a control method for the game machine, and an information storage medium, and in particular to a network shooting game or other network game for hitting other player objects with a moving object, such as a bullet object or the like, fired from the position of each player object.

### BACKGROUND ART

In a network shooting game utilizing a communication network, a plurality of players share a virtual place, and player objects, or operation targets of the players, placed in the virtual space, fire bullet objects at one another to compete in hitting other player character objects with the bullet objects.

### DISCLOSURE OF THE INVENTION

### Problems to be Solved by the Invention

In the above-described network shooting game, a player object attacks other player objects from their desired position in the virtual space. The player being attacked cannot immediately find out where the attacking player object is located and thus from where the attack was made.

The present invention has been conceived in view of the above, and aims to provide a network game system, a game machine, a game control method, and an information storage medium for enabling the player of the game to immediately find out, by looking at the game screen image when a moving object, such as a bullet object or the like, contacts another object in the virtual space, where the moving object came from.

### Means for Solving the Problems

In order to address the above-described problem, according to one aspect of the present invention, there is provided a network game system containing a plurality of game machines connected to a communication network, which share a virtual space where a plurality of player objects are placed to compete in hitting another player object with a moving object fired from a position of a player object, wherein each of the game machines comprises contact determination means for determining whether or not the moving object contacts another object placed in the virtual space; contact direction acquisition means for acquiring a contact direction of the moving object relative to the other object when the contact determination means determines that the moving object contacts the other object; and contact image displaying means for displaying an image in accordance with a direction of a contact surface of the other object and the contact direction at a position in the other object in accordance with a contact position of the moving object.

In the above, when the moving object contacts another object placed in the virtual space, an image in accordance with the direction of the contact surface of the other object and the contact direction is displayed in a position in accordance with the position (a contact position) in the other object, where the moving object contacts the other object. With the above, the player can immediately recognize, by looking at the image, from which direction the moving object comes. This can enhance the excitement of the network game for hitting another player object with a moving object fired from the position of a player object in the virtual space.

In an embodiment of the present invention, each of the player objects may comprise an invisible covering polygon model for covering the player object, and the contact image displaying means may map, when the other object contacted by the moving object is the player object, the image in accordance with the direction of the contact surface of the other object and the contact direction as a texture image in a position on the covering polygon model in accordance with the contact position. This arrangement makes it possible to immediately display an image in accordance with the state of contact of the moving object in the vicinity of the player object without executing complicated processing.

In an embodiment of the present invention, each of the game machines may further comprise image storage means for storing a plurality of images, and the image displaying means may selectively read an image in accordance with an angle formed by the direction of the contact surface of the other object and the contact direction from the plurality of images stored in the image storage means. This arrangement makes it possible to readily display an image in accordance with the state of contact of the moving object.

According to another object of the present invention, there is provided game machine connected, together with another game machine, to a communication network, for sharing, with the other game machine, a virtual space where a plurality of player objects are placed and competing in hitting the other player object with a moving object fired from a position of a player object, comprising contact determination means for determining whether or not the moving object contacts another object placed in the virtual space; contact direction acquisition means for acquiring a contact direction of the moving object relative to the other object when the contact determination means determines that the moving object contacts the other object; and contact image displaying means for displaying an image in accordance with a direction of a contact surface of the other object and the contact direction at a position in the other object in accordance with a contact position of the moving object.

According to still another object of the present invention, there is provided a control method for a game machine connected, together with another game machine, to a communication network, for sharing, with the other game machine, a virtual space where a plurality of player objects are placed and competing in hitting the other player object with a moving object fired from a position of each player object, comprising a contact determination step of determining whether or not the moving object contacts another object placed in the virtual space; a contact direction acquisition step of acquiring a contact direction of the moving object relative to the other object when it is determined in the contact determination step that the moving object contacts the other object; and a contact image displaying step of displaying an image in accordance with a direction of a contact surface of the other object and the contact direction at a position in the other object in accordance with a contact position of the moving object.

According to yet another object of the present invention, there is provided an information storage medium storing a program for causing a computer to function as a game machine connected to a communication network, which shares a virtual space where a plurality of player objects are placed to compete in hitting another player object with a moving object fired from a position of a player object, the computer functioning as contact determination means for determining whether or not the moving object contacts another object placed in the virtual space; contact direction acquisition means for acquiring a contact direction of the moving object relative to the other object when the contact determination means determines that the moving object contacts the other object; and contact image displaying means for displaying an image in accordance with a direction of a contact surface of the other object and the contact direction at a position in the other object in accordance with a contact position of the moving object. The computer may be, for example, a commercial game machine, a consumer game machine, a portable game machine, a personal computer, various server computers, a portable data assistant, a portable phone, and so forth. Also, the program may be stored in a computer readable information storage medium, such as a CD-ROM, a DVD-ROM, and so forth.

According to the present invention, when a moving object contacts another object placed in the virtual space, an image in accordance with the direction of the contact surface of the other object and the contact direction is displayed in a position in the other object in accordance with the contact position. Therefore, the player can immediately know, by looking at the image, from which direction the moving object came. This can enhance the excitement of the network game for hitting another player object with the moving object fired from the position of a player object.

### BRIEF DESCRIPTION OF THE DRAWINGS

Fig. 1 is a perspective view showing an external appearance of a game machine according to an embodiment of the present invention;
Fig. 2 is a diagram showing a complete structure of a network shooting game system according to the embodiment of the present invention;
Fig. 3 is a diagram showing one example of a game screen image;
Fig. 4 is a diagram showing a hardware structure of the game machine;
Fig. 5 is a functional block diagram of the game machine;
Fig. 6 is a diagram showing a plurality of base positions defined in a virtual three dimensional space;
Fig. 7 is a diagram illustrating a method for determining a position and posture of a player character object;
Fig. 8 is a diagram explaining a method for determining the posture of the player;
Fig. 9 is a diagram showing a structure of position data of the player character object;
Fig. 10 is a diagram showing a direction in which to change a base position (a placement reference position);
Fig. 11 is a diagram showing a structure of trajectory data of a bullet object;
Fig. 12 is a diagram illustrating a method for correcting the trajectory data;
Fig. 13 is a display explaining a method for displaying a paint mark on a static object;

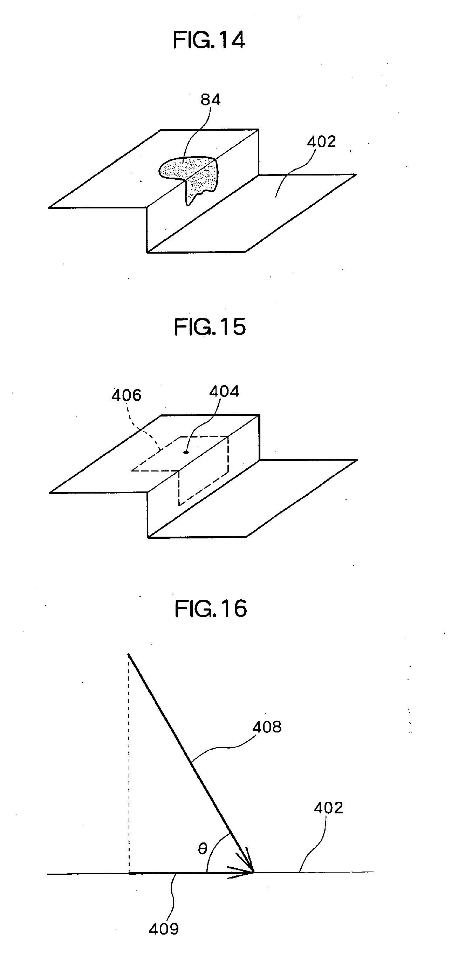

Fig. 14 is a display explaining a method for displaying a paint mark on a static object;
Fig. 15 is a display explaining a method for displaying a paint mark on a static object;
Fig. 16 is a display explaining a method for displaying a paint mark on a static object;
Fig. 17 is a display explaining a method for displaying a paint mark on a static object;
Fig. 18 is a display explaining a method for displaying a paint mark on a static object;
Fig. 19 is a display explaining a method for displaying a paint mark on a static object;
Fig. 20 is a display explaining a method for displaying a paint mark on a moving object;
Fig. 21 is a display explaining a method for displaying a paint mark on a moving object;
Fig. 22 is a display explaining a method for displaying a paint mark on a moving object; and
Fig. 23 is a display explaining a method for displaying a paint mark on a moving object.

### BEST MODE FOR CARRYING OUT THE INVENTION

In the following, one embodiment of the present invention will be described in detail based on the following drawings.

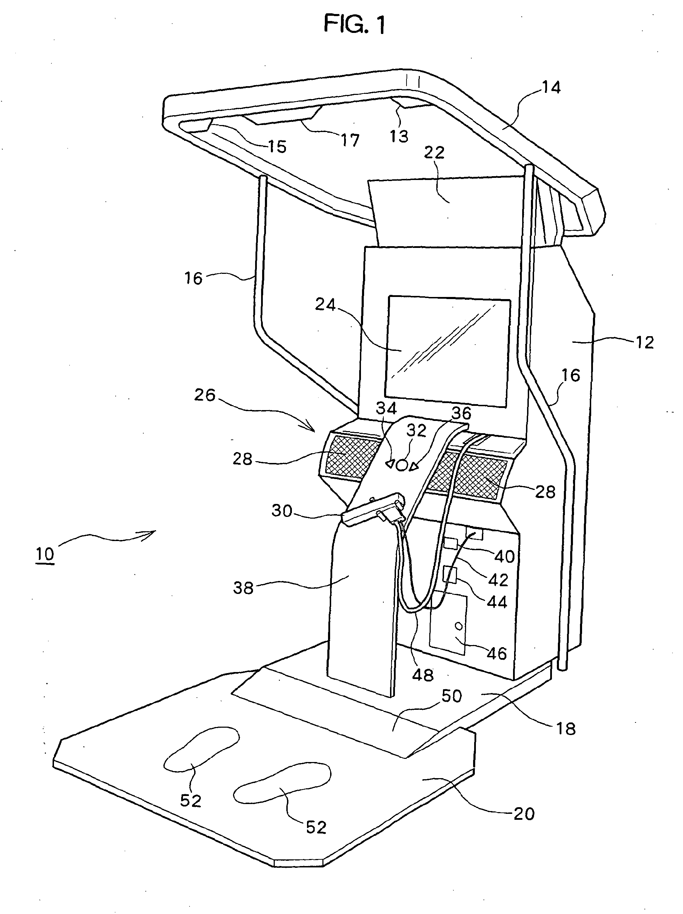

Fig. 1 is a perspective view showing an external appearance of a game machine according to one embodiment of the present invention. The game machine 10 shown is a commercial machine to be installed in various game halls and has a pedestal 18 attached below an enclosure 12, which extends forward from there. The pedestal 18 has a game stage 20 attached to the tip end portion thereof, which is thinner than the pedestal 18. A footprint 52 is printed in the middle of the game stage 20 so that the player standing on the footprint 52 is directly opposed to the enclosure 12.

The foremost portion of the pedestal 18, where the game stage 20 is attached, is formed sloping where a foot controller 50 is provided. A pressure sensor is incorporated in the foot controller 50, so that when the player standing on the game stage 20 puts their right or left foot forward and steps on the foot controller 50, such movement by the player is notified to the inside of the machine.

The enclosure 12 is taller than a typical adult and has a substantially rectangular frame 14 mounted at the upper portion thereof. The frame 14 is mounted slightly inclining so that the front portion thereof is placed higher than the rear portion thereof. The rear portion of the frame 14 is fixedly mounted to the top end of the enclosure 12 and also to the top ends of a pair of support bars 16 installed on the respective right and left sides of the enclosure 12. The pair of support bars 16 are fixed to the right and left side surfaces of the enclosure 12. An ultrasonic transmitter 17 and ultrasonic receivers 13, 15 are attached to the front portion of the frame 14. Specifically, the ultrasonic receiver 15 is located upper left of the player facing the enclosure 12; the ultrasonic receiver 13 is located upper right of the player facing the same; and the ultrasonic transmitter 17 is located upper ahead of the player facing the same. The ultrasonic transmitter 17 and the ultrasonic receivers 13, 15 are positioned on a single straight line with the ultrasonic transmitter 17 located in the exact middle between the ultrasonic receivers 13, 15. The game machine 10 measures a period of time elapsed after the ultrasonic transmitter 17 transmits ultrasonic waves downwards and before the ultrasonic receivers 13, 15 receive the reflected wave. With the above, two distances, namely the distance combining the distance from the ultrasonic transmitter 17 to the player's head and the distance from the player's head to the ultrasonic receiver 13, and the distance combining the distance from the ultrasonic transmitter 17 to the player's head and the distance from the player's head to the ultrasonic receiver 15, are obtained, and the posture of the player standing on the game stage 20 is determined based on the two distances.

A monitor 24 for showing a game screen image is mounted on the enclosure 12 in front of the player's eyes, and an advertising panel 22 is attached above the monitor 24. The portion below the monitor 24 projects forward forming a projected portion 26. A speaker 28 for outputting game sound effects and game music is mounted on the foremost surface of the projected portion 26. The upper end of the front plate 38, or a vertically long bent plate which is narrower in width than the enclosure, is mounted on the portion below the monitor 24. The lower end of the front plate 38 is attached to the top surface of the pedestal 18 such that the front plate 38 stands upright on the top surface. Specifically, the front plate 38 stands upward substantially vertically from the pedestal 18 and then bends towards the enclosure 12 with the upper end thereof attached to the portion below the monitor 24, as described above.

Selection buttons 34, 36 and a determination button 32 are formed on the front surface of the front plate 38, so that the player can carry out various select operations by pressing these buttons. Also, a gun holder is formed below the selection buttons 34, 36 and the determination button 32, where the gun controller 30 can be hooked when not used.

One end of each of the signal cable 48 and the holding cable 42 is attached to the grip of the gun controller 30. The other end of the signal cable 48 is led to the inside of the enclosure 12 so that a detected result (used in detection of the barrel direction) by the optical sensor incorporated into the barrel of the gun controller 30, and a trigger signal, are notified via the signal cable 48 to the inside of the enclosure 12. The other end of the holding cable 42 is rigidly attached to the lower portion of the enclosure 12 so as to prevent the gun controller 30 from being easily taken away.

A coin inserting slot 40 and a returned coin receiver 44 are formed on the lower portion of the enclosure 12, and a coin collection door 46 for collecting the coins inserted via the coin inserting slot 40 and accumulated in a coin box (not shown) inside the enclosure 12 is formed on the further lower portion of the enclosure 12.

With the thus constructed game machine 10, the player stands on the game stage 20 with their feet on the footprint 52, then holds the gun controller 30, directs the barrel of the gun controller 39 to the opponent shown on the monitor 24, and pulls the trigger. Accordingly, a bullet object is fired in the virtual three dimensional space, flying towards the opponent. Similarly, the opponent fires a bullet object back towards the player. The player can avoid the bullet object by moving their head left or right or bending their body to lower their head.

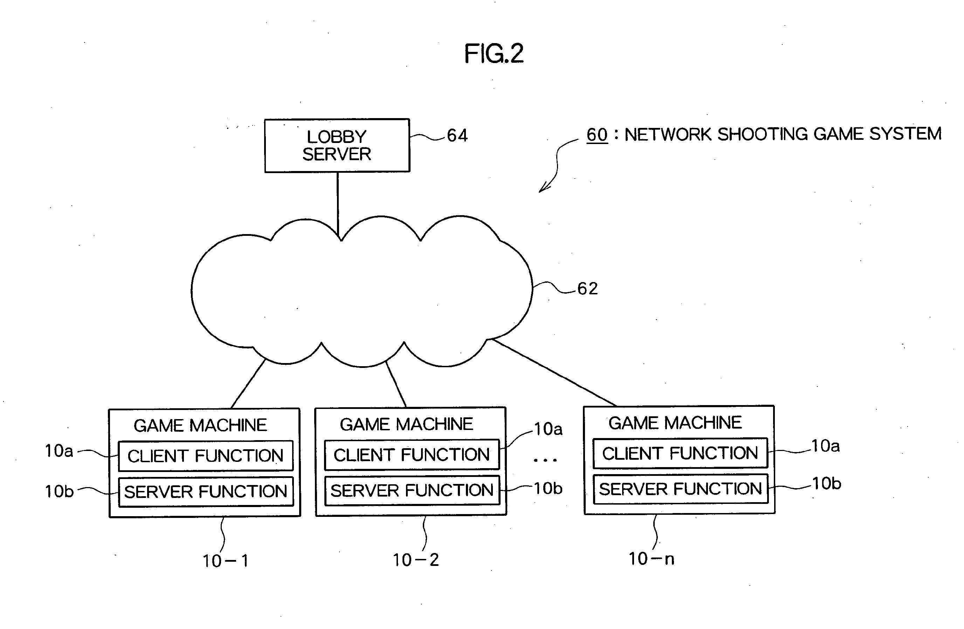

As shown in Fig. 2, the game machine 10 is connected to a communication network, constituting, together with other game machines 10, a network shooting game system. That is, as shown in Fig. 2, in the network shooting game system 60, a plurality of game machines 10 (the n number of game machines 10-1 to 10-n here), as well as a lobby server 64, are connected to a communication network 62, such as the Internet or the like. Each game machine 10 has a server function 10b in addition to a client function 10a, and the lobby server 64 selects a plurality of game machines 10 which participate in a network shooting game from among those which currently access the lobby server 64. For example, the lobby server 64 acquires information about the game training level of the player of each game machine 10, then selects a plurality of game machines 10 played by players at similar game training levels, and causes the selected game machines 10 to participate in the same network shooting game. The lobby server 64 additionally selects one of the thus selected game machines 10 as a game server. The client function 10a of the game machine 10 serving as a game server and that of the other game machine 10 receive data about the current situation in the virtual three dimensional space, or the like, via the server function 10b of the game machine 10 serving as a game server, whereby the respective game machines 10 share the virtual three dimensional space where the shooting game takes place.

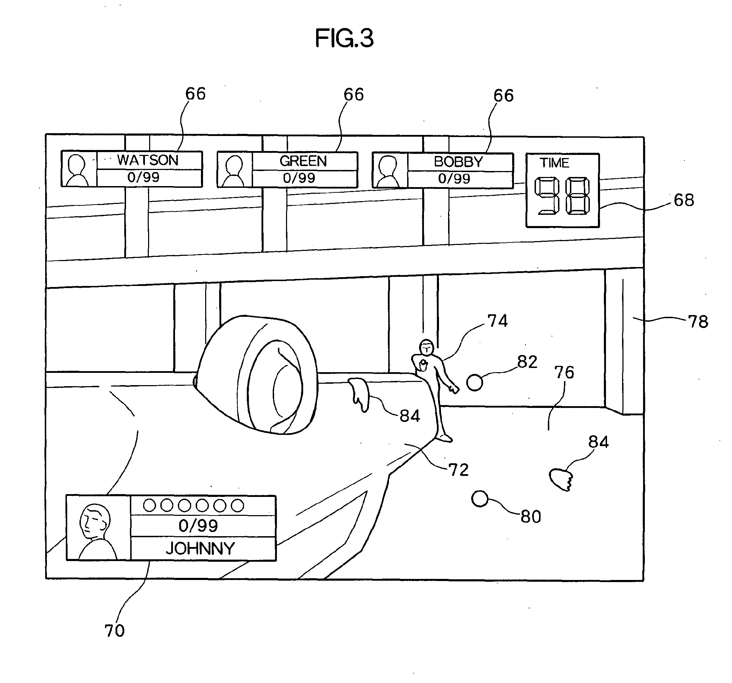

Fig. 3 shows one example of a game screen image shown on the monitor 24 of each game machine 10. In this network shooting game system 60, a player character object is associated with a game machine 10, and all of the player character objects associated with the respective game machines 10 participating in the game are placed in the virtual three dimensional space. In the game machine 10, a picture obtained by viewing the virtual three dimensional space from a viewpoint set in the position of the eyes of the player character object associated with the game machine 10 is shown as a game screen image on the monitor 24. Besides, a self status image 70 indicative of the state of the player themselves and an others status image 66 indicative of the state of other participant are shown on the game screen. In addition, an elapsed time image 68 indicative of a period of time elapsed after the game begins is shown.

As shown in Fig. 3, a moving object (an object which changes position and posture thereof as time passes), such as a player character object (a viewpoint setting object) 74 and bullet objects (moving object) 80, 82, is placed in the three dimensional space in addition to a static object (an object which does not change position and posture thereof as time passes), such as an automobile object 72, a building object 78, and a ground surface object 76. On the game screen shown in Fig. 3, a picture obtained by viewing the virtual three dimensional space from the viewpoint set in the position of the eyes of a player character object is displayed, in which a player character object 74 is displayed substantially at the center of the game screen, and a bullet object 80 representative of a paint ball (a small resin ball containing paint inside) fired by the toy gun held by the player character object 74 is displayed as if located closer to the player of that game machine 10. In addition, a bullet object 82 fired by the player character object (not shown) associated with the game machine 10 showing that game screen image is displayed around the player character object 74.

In this embodiment, the bullet objects 80, 82 are simulation of a paint ball. When the bullet object 80, 82 hits an object, such as the automobile object 72, the building object 78, the ground surface object 76, the player character object 74, or the like, for example, an image of the bullet object 80, 82 exploded with the paint inside attached to the object is displayed. Here, paint mark objects 84 are placed on the ground surface object 76 and the automobile object 72, representing the bullet objects having hit the objects. In particular, in this embodiment, the direction where the bullet object hits against such an object (a contact direction) is calculated, and a texture image in accordance with the angle formed by this direction and the direction of the contact surface (horizontal or normal direction) is used in displaying the paint mark object 84. For example, as the angle formed by the contact direction and the horizontal direction of the contact surface reaches closer to 90 degrees, the paint mark object 84 of a texture image representative of a paint mark closer to round is displayed, and as the angle formed by the contact direction and the horizontal direction of the contact surface reaches closer to zero, the paint mark object 84 of a texture image representative of an elongated paint mark extending in the horizontal direction is displayed. In the above, the direction in which the paint mark is elongated, that is, the direction in which the paint mark object 84 is placed, coincides with the contact direction of the bullet object. With the above, the player looking at the paint mark object 84 shown on the game screen can immediately know from where in the virtual three dimensional space the bullet object which causes the paint mark object 84 comes.

In the following, internal processing by each game machine 10 will be described in detail.

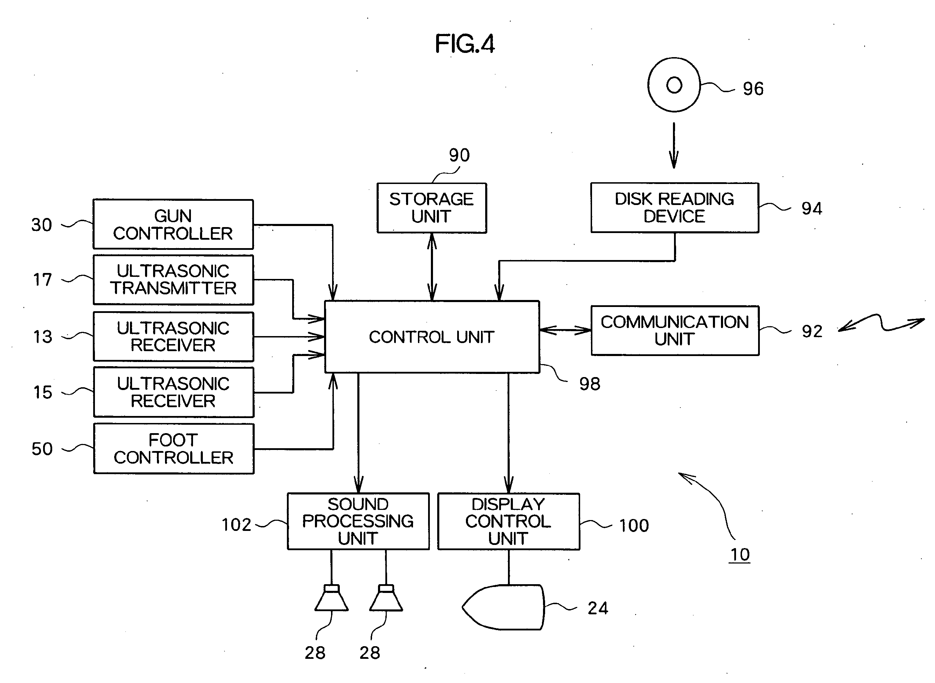

Fig. 4 is a diagram showing a hardware structure of the game machine 10. As shown in Fig. 4, the game machine 10 is a computer game system and is constructed using a control unit 98, formed by a CPU, a memory, and so forth, as a main element. The control unit 98 is connected to a gun controller 30, an ultrasonic transmitter 17, ultrasonic receivers 13, 15, a foot controller 50, a storage unit 90, a disk reading device 94, a communication unit 92, a sound processing unit 102, and a display control unit 100.

The gun controller 30 is a gun-shaped game controller and receives, via the controller unit 98, information about a time at which the player pulls the trigger, and a pointing direction of the gun controller 30 at that time (specifically, to which part in the monitor 24 the barrel of the gun controller 30 is directed). The ultrasonic transmitter 17 transmits ultrasonic wave in response to an instruction from the control unit 98. The control unit 98 begins time measurement at the moment when the ultrasonic transmitter 17 is instructed to transmit ultrasonic wave. The ultrasonic receivers 13, 15 receive the ultrasonic wave transmitted from the ultrasonic transmitter 17 and forward the received waveform thereof to the control unit 98. The control unit 98 determines the time at which the ultrasonic receivers 13, 15 receive the wave having been reflected by the player's head, based on the received waveform. The foot controller 50 notifies the control unit 98 of the fact that the player steps on the foot controller 50.

The storage unit 90 comprises various data storage means, such as a hard disk memory device, a RAM, and so forth, and stores a program to realize the client function 10a and the server function 10b.

The disk reading device 94 reads data from a disk 96, or a computer readable information storage medium, such as a CD-ROM, a DVD-ROM, or the like, and supplies the read data to the control unit 98. It is determined here that various programs to be executed in the game machine 10 are supplied from the disk 96 to the game machine 10 and then installed to the storage unit 90.

The communication unit 92, connected to the communication network 62, receives data about the state of another game machine 10 participating in the network shooting game (position data and trajectory data to be described later) from the game machine 10 operating as a game server, and sends data about the state of the own machine (the game machine 10) to the game machine 10 operating as a game server (position data and trajectory data to be described later). The game machine 10 operating as a server receives data from the client function 10a of another game machine 10 and distributes the received data to the client function 10a of still another game machine 10.

The sound processing unit 102 is connected to the speakers 28, 28, and outputs game sound effects, game music, and other sound under the control of the control unit 98. For example, a bullet firing sound is output when firing a bullet object. The display control unit 100 is connected to the monitor 24 and displays a game screen image, such as is shown in Fig. 3, for example, under control by the control unit 98.

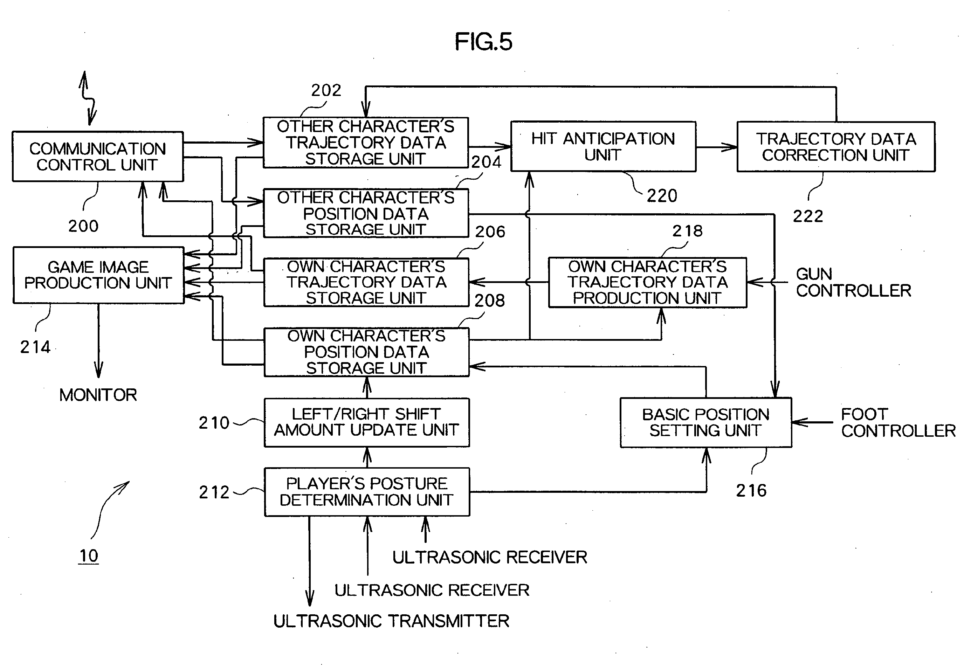

Fig. 5 is a functional block diagram of the game machine 10. The game machine 10 is a computer game system having a publicly known structure, as described above, and executing a predetermined program to thereby realize various functions. As shown in Fig. 5, the game machine 10 comprises, in terms of functions, a communication control unit 200, another character' s trajectory data storage unit 202, another character's position data storage unit 204, an own character's trajectory data storage unit 206, an own character's position data storage unit 208, a left/right shift amount update unit 210, a player's posture determination unit 212, a basic position setting unit 216, an own character's trajectory data production unit 218, a hit anticipation unit 220, a trajectory data correction unit 222, and a game image production unit 214. These functions are realized by the control unit 98 by executing a program supplied from the disk 96 to the game machine 10.

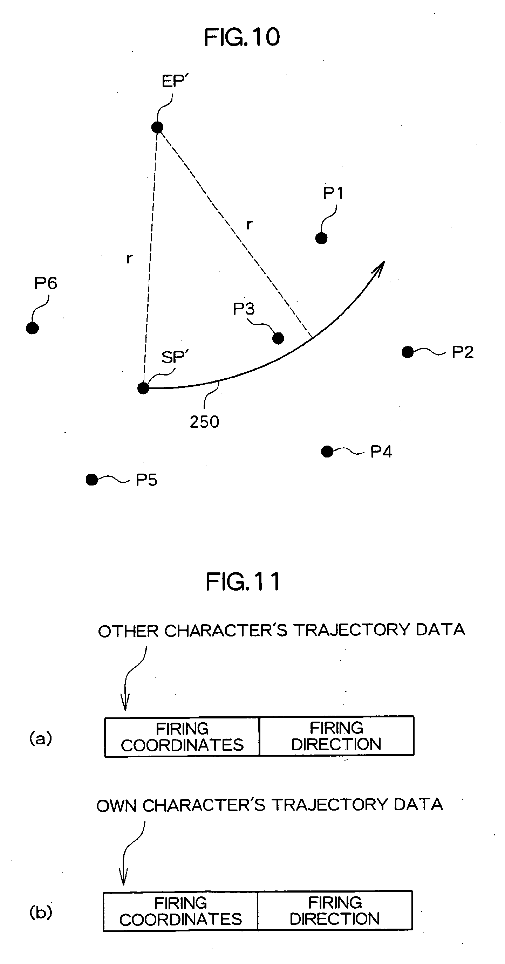

Initially, the own character's trajectory data production unit 218 produces trajectory data based on an input from the gun controller 30. That is, with data indicative of the barrel direction input from the gun controller 30, the position coordinates of the own character at the time (the absolute coordinates in the virtual three dimensional space) are produced based on the content stored in the own character's position data storage unit 208. The produced position coordinates, regarded as a bullet object firing position, and the barrel direction (a firing direction) input from the gun controller 30 are stored as trajectory data in the own character's trajectory data storage unit 206. Fig. 11 (b) shows a structure of data stored in the own character's trajectory data storage unit 206. The trajectory data stored in the own character' s trajectory data storage unit 206 is sent by the communication control unit 200 to the game machine 10 executing the server function 10b, which in turn distributes the received trajectory data to another game machine 10 participating in the network shooting game. The communication control unit 200 of each game machine 10 receives the data, which in turn is stored in the other character's trajectory data storage unit 202. Fig. 11 (a) shows a structure of data stored in the other character's trajectory data storage unit 202.

With the trajectory data produced by another game machine 10 stored in the other character's trajectory data storage unit 202, the hit anticipation unit 220 anticipates whether or not the bullet object will hit a player character object aimed at, based on the trajectory data stored in the other character's trajectory data storage unit 202 and the position coordinates (the absolute coordinates) of the player character object associated with the game machine 10, calculated based on the content stored in the own character's position data storage unit 208. That is, whether or not the anticipated trajectory of the bullet object, indicated by the trajectory data, will enter an area (not shown) for hit-check (interference determination), which is set on the player character object aimed at, is determined. The trajectory of the bullet object may be a straight line or a parabola, with various other trajectories also available.

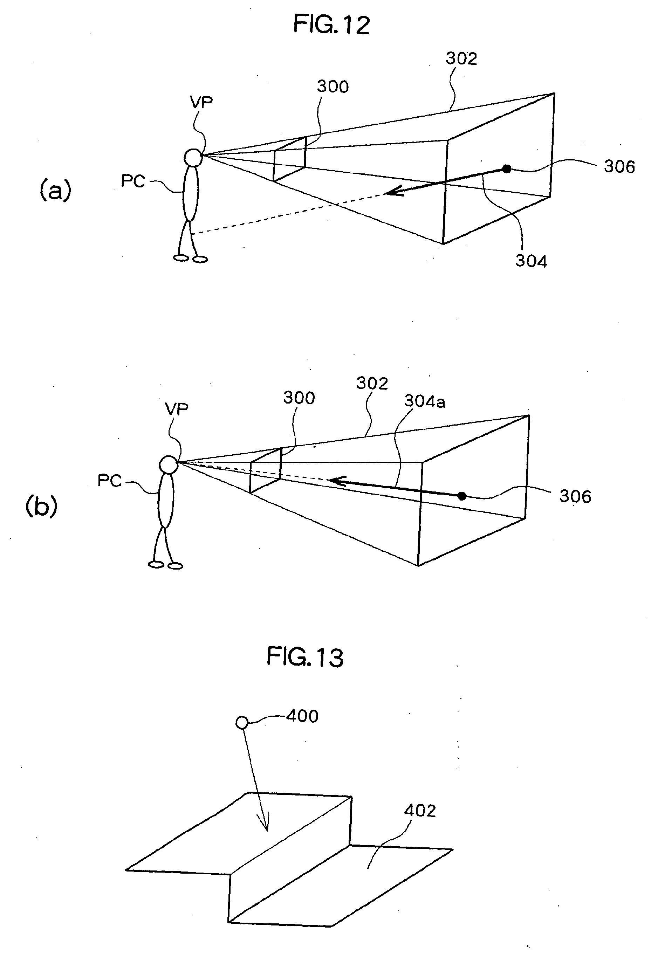

When the bullet object enters the hit-check area, that is, when the bullet object 306 is anticipated to hit the predetermined point set on the player character PC (see Fig. 12 (a)), the trajectory data correction unit 222 corrects the trajectory data stored in the other character's trajectory data storage unit 202 based on the position coordinates of the viewpoint VP set at the position of the eyes of the player character object PC associated with the game machine 10 (see Fig. 12 (b)). Specifically, the trajectory data correction unit 222 changes the firing direction 304 in the trajectory data so as to be directed to the viewpoint VP set at the position of the eyes of the player character PC, and thereby obtain a corrected firing direction 304a. That is, the trajectory data correction unit 222 corrects the firing direction 304 (vector data) which constitutes the trajectory data, such that a smaller angle is formed by the vector connecting the firing position of the bullet object 306 and the viewpoint VP and the vector of the firing direction 304 of the bullet object 306. Then, the corrected data is stored in the other character's trajectory data storage unit 202. With the above, the bullet object 306 resultantly moves in the view field range 302 of the player character PC. That is, when a game screen image is produced by projecting the picture showing the situation in the virtual three dimensional space onto the screen 300, the bullet object 306 is reliably displayed on the formed game screen.

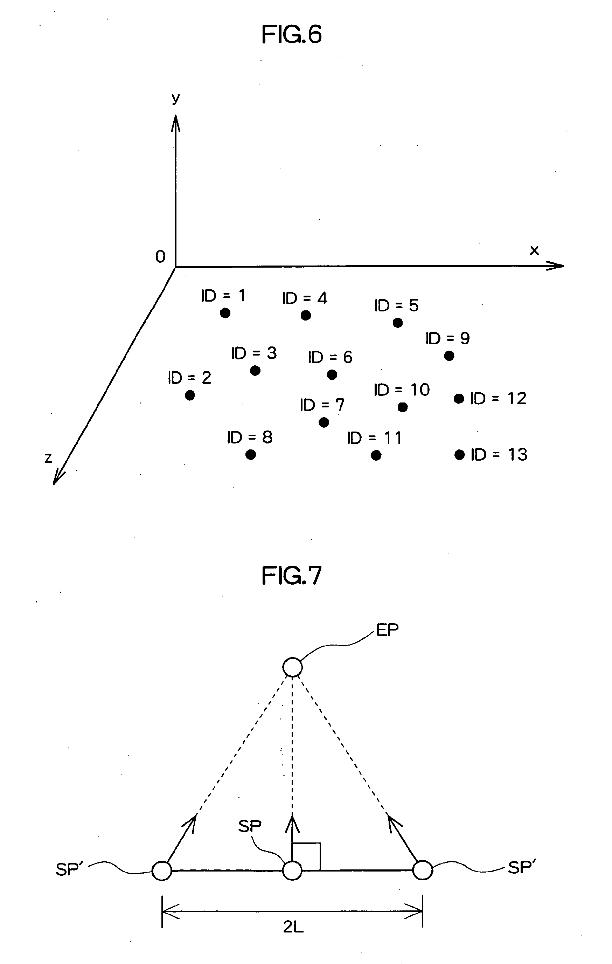

In the game machine 10, a plurality of base positions are defined in the virtual three dimensional space, which serves as a stage of the game, as shown in Fig. 6, and the position coordinates and ID' s of the positions are stored in advance. The actual position of each game character object is determined using a base position as a reference (a placement reference position). The basic position setting unit 216 selects as a placement reference position the base position of the player character object associated with the game machine 10. Specifically, at the start of the game, a predetermined base position is selected as a placement reference position. Then, when the player's posture determination unit 212 determines that a period of time longer than a predetermined period of time has elapsed with the player remaining in a posture largely displaced left or right on the game stage 20, a base position which is present in the direction corresponding to the direction in which the player moves their body in the virtual three dimensional space is newly defined as a placement reference position. Alternatively, with the foot controller 50 stepped on, a base position ahead of the player character object may be newly defined as a placement reference position.

The basic position setting unit 216 selects an opponent player character to whom the player character object associated with the game machine 10 faces, from among the other player character objects placed in the virtual three dimensional space, and manages the base position associated with that player character as a pointing position. Specifically, the other character's position data storage unit 204 stores base positions (a placement reference position) selected in other game machines 10, and one of those positions stored is selected as a pointing position. The result of selection by the basic position setting unit 216 (the placement reference position and the pointing position of the player character object associated with the game machine 10) is stored in the own character's position data storage unit 208.

Fig. 10 is a diagram explaining a method for re-selecting a placement reference position. As shown in Fig. 10, with the base positions P1 to P6 defined in the virtual three dimensional space, an trajectory 250 which centers the position of the opponent player character object (opponent object) placed in the pointing position and passing through the current position SP' of the player character object is calculated. The trajectory 250 runs counter-clockwise on a flat surface when the player's face moves left facing the enclosure 12. When the player's head moves right facing the enclosure 12, the trajectory 250 runs clockwise on a flat surface. Then, the base position (P3 here) closest to the trajectory 250 is selected as a new placement reference position.

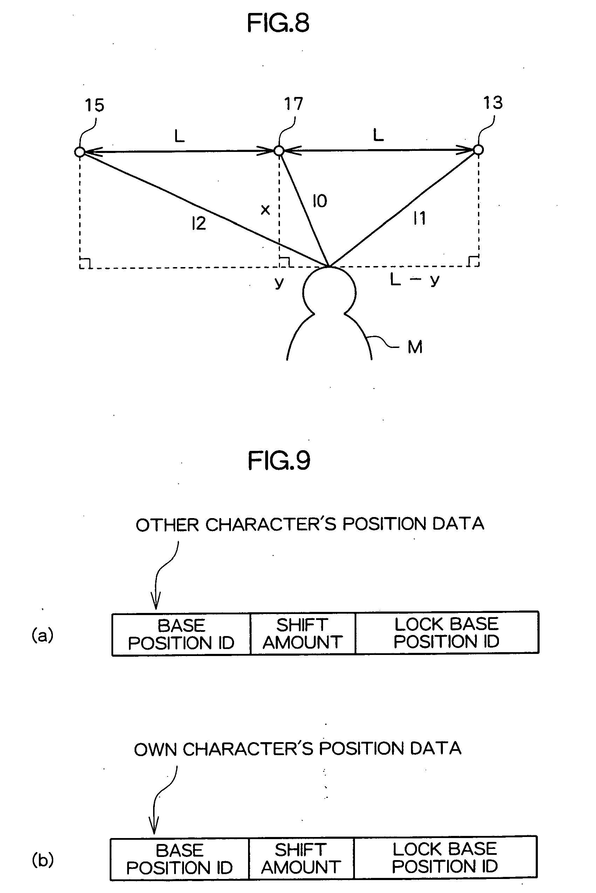

The player's posture determination unit 212 determines the posture of the player standing on the game stage 20, using the ultrasonic transmitter 17 and the ultrasonic receivers 13, 15. That is, as shown in Fig. 8, periods of time elapsed after the ultrasonic transmitter 17 transmits ultrasonic wave and before the reflected ultrasonic wave from the head of the player M is incident into the respective ultrasonic receivers 13, 15 are measured, and the sum of the distance 10 from the ultrasonic transmitter 17 to the head of the player M and the distance 11 from the head of the player M to the ultrasonic receiver 13, or (10+11), and the sum of the distance 10 from the ultrasonic transmitter 17 to the head of the player M and the distance 12 from the head of the player M to the ultrasonic receiver 15, or (10+12), are obtained based on the measured periods of time. As the length L in the drawing is known, the data (x and y) specifying the position of the head of the player M can be calculated based on such information. Then, when the absolute value of the value y (the amount by which the player's head shifts remains equal to or larger than the predetermined value for more than a predetermined period of time, the displaced direction of the player's head is informed to the basic position setting unit 216, which, in response, re-selects the placement reference position.

Meanwhile, when the absolute value of the value y does not remain equal to or larger than the predetermined value for more than a predetermined period of time, the player's posture determination unit 212 informs the left/right shift amount update unit 210 of the value of y. The left/right shift amount update unit 210 in turn calculates the shift amount of the player character object based on the value of y and stores in the own character's position data storage unit 208. The shift amount may be, for example, the value of y itself informed by the player's posture determination unit 212 or may be calculated by executing various processing, such as smoothening, or the like, with respect to the sequentially produced values of y.

Fig. 9 (b) shows a structure of data stored in the own character's position data storage unit 208. As shown in Fig. 9 (b), the position data contains a base position ID identifying the base position selected by the basic position setting unit 216 as a placement reference position, a shift amount set by the left/right shift amount update unit 210, and a base position ID (a lock base position ID) identifying the base position selected by the basic position setting unit 216 as a pointing position.

Fig. 7 indicates the relationship among the shift amount, the placement reference position, and the current position of the player character. In Fig. 7, the thick line arrow represents the posture of the player character object, SP represents a placement reference position, SP' represents the position of the player character object having been shifted by a maximum distance, and EP represents the base position selected as a pointing position. The player character object moves left or right, while pointing to the pointing position EP, by the shift amount set by the left/right shift amount update unit 210 with the placement reference position SP as a center. It should be noted that, although the shift direction of the player character is determined in the above as perpendicular to the direction extending from the placement reference position SP to the pointing position EP, the player character object may be shifted in another direction. The shift amount is limited to a constant distance in each of the left and right directions (L for both here).

The communication control unit 200 sends the data stored in the own character's position data storage unit 208 to the game machine 10 executing the server function 10b, which in turn distributes the received data to another game machine 10 participating in the network game. The communication control unit 200 receives the position data thus distributed and stores in other character's position data storage unit 204. Fig. 9 (a) shows a structure of data stored in the other character's position data storage unit 204.

The game image production unit 214 renders a game screen image to be displayed on the monitor 24 based on the contents stored in the other character's trajectory data storage unit 202, the other character's position data storage unit 204, the own character's trajectory data storage unit 206, and the own character's position data storage unit 208. Specifically, trajectory data is read from the other character' s trajectory data storage unit 202, and a bullet object is placed on the trajectory indicated by the trajectory data in the virtual three dimensional space and moved as time passes. Similarly, trajectory data is read from the own character's trajectory data storage unit 206, and a bullet object is placed on the trajectory indicated by the trajectory data in the virtual three dimensional space and moved as time passes.

Further, position data is read from the other character's position data storage unit 204, and the player character object associated with another game machine 10 is placed in the position indicated by the position data in the virtual three dimensional space. In the above, the posture of the player character object is determined so as to be directed from the current position to the pointing position, based on the pointing position (the lock base position ID). The player character object is placed in the position shifted by a shift amount from the placement reference position. Similarly, position data is read from the own character' s position data storage unit 208, and the player character object associated with the game machine 10 is placed in the position indicated by the position data in the virtual three dimensional space. In the above also, the posture of the player character object is determined based on the pointing position (the lock base position ID) so as to be directed from the current position to the pointing position. Also, the player character object is placed in a position shifted by a shift amount from the placement reference position.

Further, in this game machine 10, whether or not a bullet object contacts other object is initially determined. If the bullet object ever contacts another object, trajectory data related to the bullet object is deleted from the other character's trajectory data storage unit 202 or the own character's trajectory data 206, and an image representative of a paint mart is displayed at the contact position. With the above, a paint mark object is placed at a position where the bullet object contacts (or hits) another object in the virtual three dimensional space.

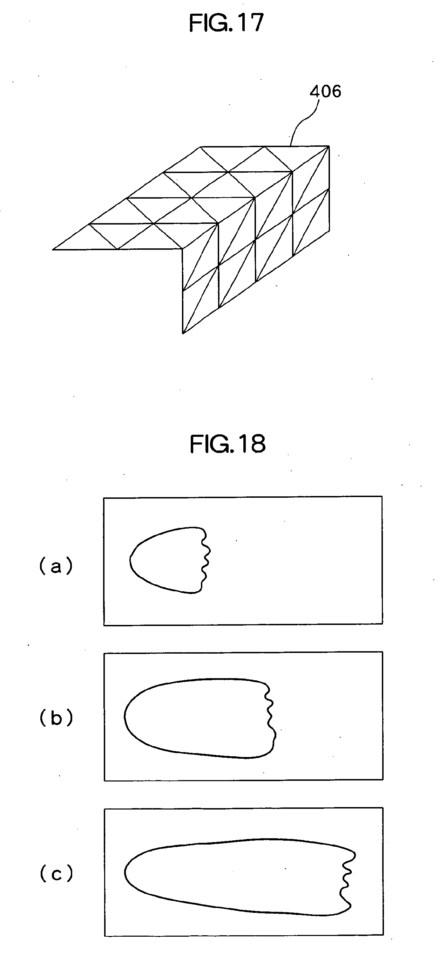

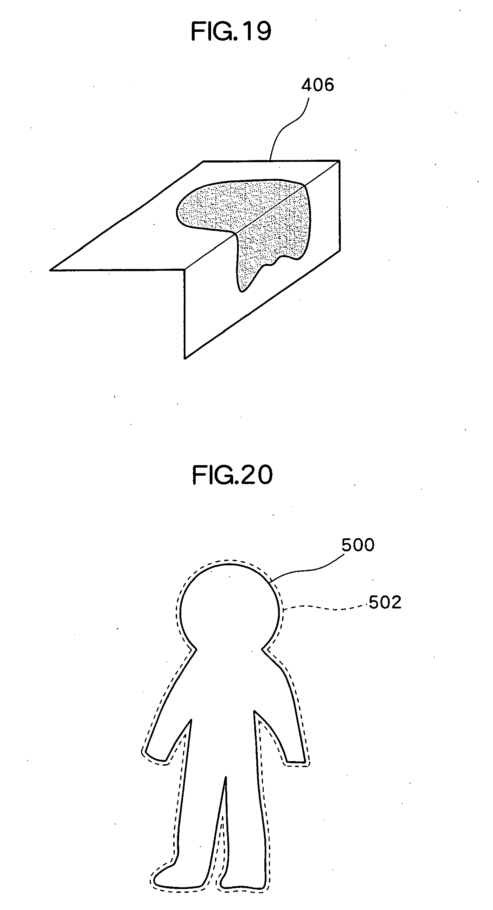

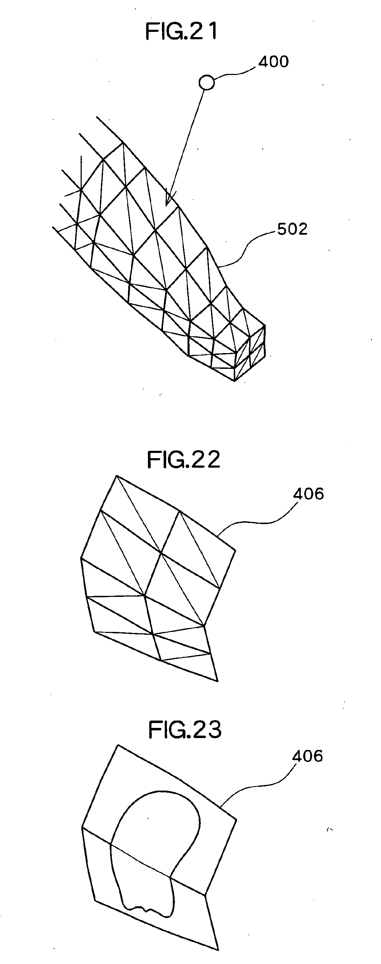

As a method for displaying a paint mark object, two methods described below are adopted. For a static object, such as a building object 78 and so forth, when the bullet object 400 contacts a static object 402, as shown in Fig. 18, a portion of the static object 402 around the contact position 404 is cut off, as shown in Fig. 20. In the above, the contact direction 408 is calculated based on the trajectory of the bullet object 400 and projected onto the static object 402 to thereby obtain a vector 409, and an angle θ formed by the vector 409 and the contact direction 408 is calculated, as shown in Fig. 21.

In cutting off the portion of the static object 402 around the contact position 404, the direction of the portion cut off is determined according to the vector 409. Then, the polygon forming the cut off paint mark object 406 is divided into smaller pieces (see Fig. 22), onto which a texture image representative of a paint mark is mapped. In the above, a plurality of texture images, each representative of the paint mark, are prepared in advance and stored in association with the respective concerned ranges of the angle θ (see Fig. 23), so that a texture image according to the thus calculated angle θ is selectively read and mapped onto the paint mark object 406 (see Fig. 24). Thereafter, the paint mark object 406 is placed on the contact position of the bullet object 400 in the original static object 402.

Meanwhile, for a moving object, such as a player character object and so forth, an invisible polygon model (a paint mark object) 502 is placed around the moving object 500, which is large enough to fully encompass the moving object, as shown in Fig. 25. The polygon model 502 is formed by combining finer polygons than the moving object 500 itself, which enables mapping of any texture onto any point, as shown in Fig. 26. Then, when the bullet object 400 comes into contact with the moving object 500, the position of the polygon model 502 according to the contact position is specified (see Fig. 27), and the paint mark texture image prepared in advance, as shown in Fig. 23, is mapped onto the specified position (see Fig. 28). In the above, a texture image in accordance with the angle formed by the contact direction of the bullet object 400 relative to the moving object 500 and the direction of the contact surface is selectively read and mapped onto the contact position.

Thereafter, the game image production unit 214 produces an image showing a picture obtained by viewing the virtual three dimensional space from a viewpoint defined in the position of the eyes of the player character object associated with the game machine 10 and displays the image on the monitor 24.

According to the above-described network game system, when it is anticipated that the bullet object will come into contact with the player character object, the trajectory of the bullet object is corrected such that the bullet object moves toward the viewpoint set on the player character. This arrangement makes it possible to display the bullet flying, by displaying an image representative of a picture obtained by viewing the virtual three dimensional space from the viewpoint.

The arrangement in which the positions of the respective player character objects are restricted to any of the plurality of predetermined base positions and the postures thereof are calculated based on the base positions to which other player character objects are restricted makes it possible for the plurality of game machines 10 to share the positions and postures of the objects associated with the respective game machines 10 by the plurality of game machines while suppressing an increase in traffic in the communication network 62.

Further, the arrangement in which a paint mark object having a texture image mapped thereon in accordance with the contact direction and the direction of the contact surface is displayed when a bullet object contacts another object makes it possible for the player to instantly recognize where the bullet object came from by looking at the game screen.

## Claims

1. A network game system containing a plurality of game machines connected to a communication network, which share a virtual space where a plurality of player objects are placed to compete in hitting another player object with a moving object fired from a position of a player object, wherein
each of the game machines comprises:
contact determination means for determining whether or not the moving object contacts another object placed in the virtual space;
contact direction acquisition means for acquiring a contact direction of the moving object relative to the other object when the contact determination means determines that the moving object contacts the other object; and
contact image displaying means for displaying an image in accordance with a direction of a contact surface of the other object and the contact direction at a position in the other object in accordance with a contact position of the moving object.

2. The network game system according to claim 1, wherein
each of the player objects comprises an invisible covering polygon model for covering the player object, and
the contact image displaying means maps, when the other object contacted by the moving object is the player object, the image in accordance with the direction of the contact surface of the other object and the contact direction as a texture image at a position on the covering polygon model in accordance with the contact position.

3. The network game system according to claim 1 or 2, wherein
each of the game machines further comprises image storage means for storing a plurality of images, and
the image displaying means selectively reads an image in accordance with an angle formed by the direction of the contact surface of the other object and the contact direction from the plurality of images stored in the image storage means.

4. A game machine connected, together with another game machine, to a communication network, for sharing, with the other game machine, a virtual space where a plurality of player objects are placed and competing in hitting the other player object with a moving object fired from a position of a player object, comprising:
contact determination means for determining whether or not the moving object contacts another object placed in the virtual space;
contact direction acquisition means for acquiring a contact direction of the moving object relative to the other object when the contact determination means determines that the moving object contacts the other object; and
contact image displaying means for displaying an image in accordance with a direction of a contact surface of the other object and the contact direction at a position in the other object in accordance with a contact position of the moving object.

5. A control method for a game machine connected, together with another game machine, to a communication network, for sharing, with the other game machine, a virtual space where a plurality of player objects are placed and competing in hitting the other player object with a moving object fired from a position of each player object, comprising:
a contact determination step of determining whether or not the moving object contacts another object placed in the virtual space;
a contact direction acquisition step of acquiring a contact direction of the moving object relative to the other object when it is determined at the contact determination step that the moving object contacts the other object; and
a contact image displaying step of displaying an image in accordance with a direction of a contact surface of the other object and the contact direction at a position in the other object in accordance with a contact position of the moving object.

6. An information storage medium storing a program for causing a computer to function as a game machine connected to a communication network, which share a virtual space where a plurality of player objects are placed to compete in hitting another player object with a moving object fired from a position of a player object, the computer functioning as:
contact determination means for determining whether or not the moving object contacts another object placed in the virtual space;
contact direction acquisition means for acquiring a contact direction of the moving object relative to the other object when the contact determination means determines that the moving object contacts the other object; and
contact image displaying means for displaying an image in accordance with a direction of a contact surface of the other object and the contact direction at a position in the other object in accordance with a contact position of the moving object.
